(19) **Europäisches Patentamt / European Patent Office / Office européen des brevets**

(11) **EP 3 010 173 B1**

(12) **EUROPEAN PATENT SPECIFICATION**

(45) Date of publication and mention
of the grant of the patent:
**16.01.2019 Bulletin 2019/03**

(21) Application number: **14826095.3**

(22) Date of filing: **02.07.2014**

(51) Int Cl.:
*H04L 9/08* (2006.01)　　　*G06F 21/60* (2013.01)

(86) International application number:
**PCT/JP2014/067639**

(87) International publication number:
**WO 2015/008623 (22.01.2015 Gazette 2015/03)**

(54) **KEY STORAGE DEVICE, KEY STORAGE METHOD, AND PROGRAM THEREFOR**

VORRICHTUNG UND VERFAHREN ZUR SCHLÜSSELSPEICHERUNG SOWIE PROGRAMM

DISPOSITIF DE MÉMORISATION DE CLÉ, PROCÉDÉ DE MÉMORISATION DE CLÉ, ET PROGRAMME POUR CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2013 JP 2013149153**

(43) Date of publication of application:
**20.04.2016 Bulletin 2016/16**

(73) Proprietor: **Nippon Telegraph And Telephone Corporation**
**Chiyoda-ku,**
**Tokyo 100-8116 (JP)**

(72) Inventors:
 • **KOBAYASHI, Tetsutaro**
 **Musashino-shi,**
 **Tokyo 180-8585 (JP)**
 • **YAMAMOTO, Go**
 **Musashino-shi,**
 **Tokyo 180-8585 (JP)**
 • **YOSHIDA, Reo**
 **Musashino-shi,**
 **Tokyo 180-8585 (JP)**

 • **YAMAMOTO, Tomohide**
 **Musashino-shi,**
 **Tokyo 180-8585 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A2-2004/008676　　JP-A- H10 301 491**
**JP-A- H11 122 240　　JP-A- 2002 208 216**
**JP-A- 2005 122 359　　US-A1- 2012 017 095**

 • **BERSON T ET AL: "Cryptography as a network service", 8TH ANNUAL SYMPOSIUM ON NETWORK AND DISTRIBUTED SYSTEM SECURITY. (NDSS'01) INTERNET SOC RESTON, VA, USA,, 7 February 2001 (2001-02-07), pages 1-12, XP002551706,**
 • **'Focus on the News' NTT GIJUTSU JOURNAL vol. 24, no. 5, 01 May 2012, pages 46 - 47, XP055311669**

**Description**

[TECHNICAL FIELD]

The present invention relates to a key storage apparatus which secretly manages a key used for arithmetic processing, a key storage method, and a program therefor.

[BACKGROUND ART]

Patent literature 1 is known as a prior-art technique of a key storage apparatus which secretly stores a secret key used for arithmetic processing. In Patent literature 1, a key storage apparatus receives encrypted ciphertext in accordance with a public key cryptosystem from a terminal apparatus, decrypts the ciphertext with a secret key, and outputs a decryption result to the terminal apparatus.

Patent literature 2 discloses a method and apparatus for managing cryptographic keys and performing cryptographic services within server or other computing environments. An appliance functions as a cryptographic key server to secure cryptographic keys and provide cryptographic operations as a network service.

Reference is also made to Non-patent literature 1.

[PRIOR ART LITERATURE]

[PATENT LITERATURE]

Patent literature 1: Japanese Patent Application Laid-Open No. 2012-151756
Patent literature 2: International Patent Application Laid-Open No. WO 2004/008676 A2

[NON-PATENT LITERATURE]

Non-patent literature 1: Berson T. et al., Cryptography as a Network Service, 8th ANNUAL SYMPOSIUM ON NETWORK AND DISTRIBUTED SYSTEM SECURITY (NDSS'01), 7 February 2001, pp. 1-12

[SUMMARY OF THE INVENTION]

[PROBLEMS TO BE SOLVED BY THE INVENTION]

It is assumed that a key storage apparatus should secretly store a key and should not output the key to the outside before expiration of a period during which arithmetic processing using the key is provided (hereinafter referred to as an "arithmetic processing provision period"). Further, it is assumed that the key storage apparatus outputs the key to a user provided with the arithmetic processing when the arithmetic processing provision period expires. These assumptions are for coping with the following problem the inventor found. For example, if, in a decryption system of Patent literature 1, the secret key is not distributed to the user when the arithmetic processing provision period expires, a problem may occur that the user loses means for decrypting the ciphertext. In order to solve this problem, it is thought it is necessary to distribute the secret key to the user in consideration of the convenience of the user when provision of decryption processing expires.

When the secret key is outputted to the user of the arithmetic processing when the arithmetic processing provision period expires, however, the following problem newly occurs.

There is a possibility that an attacker illegally intrudes into the key storage apparatus after expiration of the arithmetic processing provision period and resumes a service in the quite same configuration. Even if the secret key is eliminated from the key storage apparatus after the arithmetic processing provision period, the attacker can resume the service in the quite same configuration using the secret key directly or indirectly distributed (via the authorized user). Then, the user who does not know that the arithmetic processing provision period expired or the user who thinks the service is resumed transmits ciphertext to the key storage apparatus manipulated by the attacker, which may cause a problem of information leakage.

An object of the present invention is to provide a key storage apparatus which prevents a service from being resumed with the same configuration as a configuration during an arithmetic processing provision period, a key storage method, and a program therefor.

[MEANS TO SOLVE THE PROBLEMS]

In order to solve the above problem, the present invention provides a key storage apparatus and a key storage method having the features of the respective independent claims.

According to a first aspect of the present invention, a key storage apparatus is such that before expiration of a period for providing arithmetic processing using a key, the key is secretly managed, and that the key is outputted when the period expires; and the key storage apparatus comprises: a one-way function section causing a one-way function to act on first information to generate the key; a storage section secretly storing the first information during the period; and an expiration judging section eliminating the first information from the storage section and outputting the key to a user provided with the arithmetic processing when the period expires.

[EFFECTS OF THE INVENTION]

According to a first aspect of the present invention, it is possible to prevent an attacker from resuming a service with the same configuration as a configuration during an arithmetic processing provision period.

[BRIEF DESCRIPTION OF THE DRAWINGS]

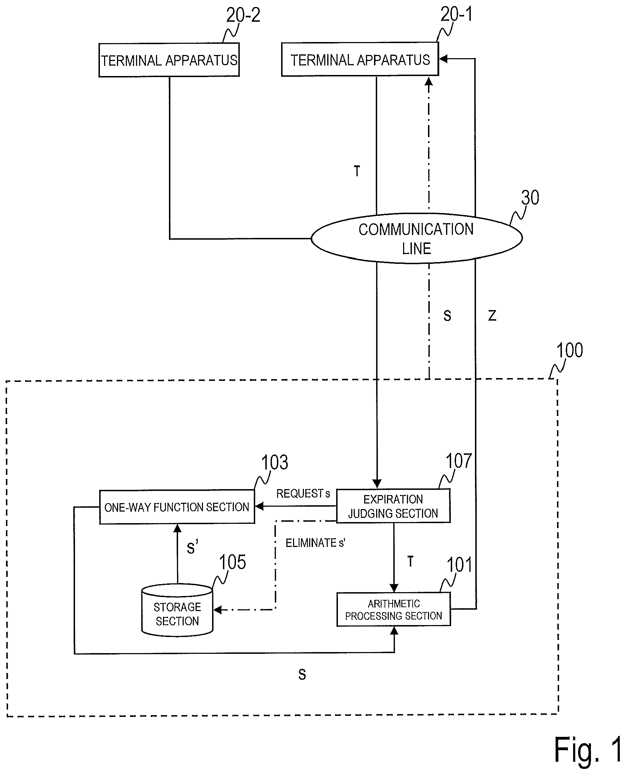

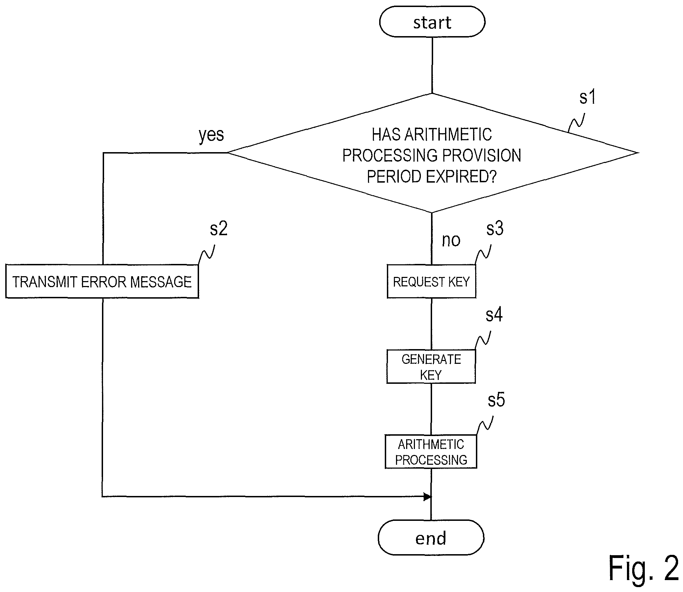

Fig. 1 is a functional block diagram of a key storage apparatus according to a first embodiment; and Fig. 2 is a diagram showing a process flow of the key storage apparatus according to the first embodiment.

[DETAILED DESCRIPTION OF THE EMBODIMENTS]

An embodiment of the present invention will be described below. In drawings used in the description below, components having the same function or steps for performing the same processing will be given the same reference numeral to omit duplicated description.

<First embodiment>

A key storage apparatus 100 according to a first embodiment will be described with the use of Figs. 1 and 2. Fig. 1 shows a functional block diagram of the key storage apparatus 100 according to the first embodiment, and Fig. 2 shows a process flow of the key storage apparatus 100 according to the first embodiment.

The key storage apparatus 100, a terminal apparatus 20-1 and a terminal apparatus 20-2 are connected to one another via a communication line 30.

The key storage apparatus 100, the terminal apparatus 20-1 and the terminal apparatus 20-2 are equipment provided with a calculation function and a storage function, such as a router apparatus, a server apparatus, a mobile phone and an IC card; a well-known or dedicated computer provided with a CPU and a RAM in which a special program is read; or the like.

The key storage apparatus 100 comprises an arithmetic processing section 101, a one-way function section 103, a storage section 105 and an expiration judging section 107.

It is assumed that the key storage apparatus 100 secretly manages a key s before expiration of an arithmetic processing provision period and outputs the key s when the arithmetic processing provision period expires. Here, "management" is a concept which includes not only storage but also generation. In addition, "management" may be a concept which includes addition, change, deletion, association with a terminal apparatus or information $\tau$, and the like.

Before expiration of the arithmetic processing provision period, the key storage apparatus 100 receives the information $\tau$, which is to be an arithmetic processing target, from the terminal apparatus 20-1, performs predetermined arithmetic processing using the key s, and transmits an operation result z to the terminal apparatus 20-1.

Prior to provision of the arithmetic processing, the storage section 105 secretly stores first information s'.

When the arithmetic processing provision period expires, the expiration judging section 107 eliminates the first information s' from the storage section 105 and outputs the key s to the terminal apparatus 20-1 (indicated by a dot-and-dash line in Fig. 1).

When receiving the information $\tau$, the expiration judging section 107 judges whether the arithmetic processing provision period has expired or not (s1). If the arithmetic processing provision period has expired, the expiration judging section 107 transmits an error message to the effect that the arithmetic processing provision period has expired, to the terminal apparatus 20-1 (s2). On the other hand, if the arithmetic processing provision period has not expired, the expiration judging section 107 outputs the information $\tau$ to the arithmetic processing section 101 and requests the key s from the one-way function section 103 (s3).

When the key s is requested from the one-way function section 103, the one-way function section 103 takes out the first information s' from the storage section 105. The one-way function section 103 causes a one-way function to act on the first information s' to generate the key s (s4) and outputs the key s to the arithmetic processing section 101. For example, when it is assumed that a one-way hash function Hash() exists, the one-way function section 103 causes the one-way hash function Hash() to act on the first information s' to generate a key s=Hash(s').

The arithmetic processing section 101 performs predetermined arithmetic processing using the key s and transmits an operation result z to the terminal apparatus 20-1 (s5). The arithmetic processing section 101 may secretly store the key s or may eliminate the key s after performing the arithmetic processing. In the case of secretly storing the key s, the arithmetic processing section 101 can omit s3 (request for key) and s4 (generation of key) described above from next time. On the other hand, in the case where the arithmetic processing section 101 eliminates the key s after performing the arithmetic processing, the key s does not exist inside the key storage apparatus 100 anymore, and the degree of security increases more. The key storage apparatus 100 may generate the key s and secretly store the key s in advance before receiving the information $\tau$. In short, it is only necessary to make such a configuration that the key storage apparatus 100 secretly manages the key s before expiration of the arithmetic processing provision period, eliminates the first information s' from the key storage apparatus 100 (more specifically, the storage section 105) and outputs the key s to a user (the terminal apparatus 20-1 in this example) when the arithmetic processing provision period expires.

As the arithmetic processing, encryption, decryption, signature generation and the like are conceivable. Furthermore, as the encryption, encryption by a common key cryptosystem is conceivable. As the decryption, decryption by a common key cryptosystem or by a public key cryptosystem is conceivable. As the common key cryptosystem, AES, DES and the like are conceivable, and the key s is a common key. As the public key cryptosystem, RSA cipher, ElGamal cipher, elliptic ElGamal cipher and the like are conceivable, and the key s is a secret key. As the signature generation, RSA signature and the like are conceivable, and the key s is a signature key. The arithmetic processing will be illustrated below.

(Encryption and decryption by common key cryptosystem)

An example of the common key cryptosystem will be described. First, the key storage apparatus 100 generates first information s'.

The terminal apparatus 20-1 requests the key storage apparatus 100 to encrypt plaintext M via the communication line 30.

The key storage apparatus 100 receives the plaintext M and performs s1 to s4 (judgment about arithmetic processing provision period, request for key and generation of key). The key storage apparatus 100 encrypts the plaintext M with a common key c(=s) and transmits ciphertext C=Enc(M,c) to the terminal apparatus 20-1 (s5). In this case, the key storage apparatus 100 performs the encryption as the predetermined arithmetic processing, receives the plaintext M as the information $\tau$, which is to be an arithmetic processing target, and outputs the ciphertext C as the operation result z.

The terminal apparatus 20-1 receives the ciphertext C and stores it. In this example, this ciphertext C is transmitted to the terminal apparatus 20-2.

The terminal apparatus 20-2 receives the ciphertext C and stores it. The terminal apparatus 20-2 requests the key storage apparatus 100 to decrypt the ciphertext C via the communication line 30.

The key storage apparatus 100 receives the ciphertext C and performs s1 to s4 (judgment about arithmetic processing provision period, request for key and generation of key). The key storage apparatus 100 decrypts the ciphertext C using a common key c and transmits a decryption result M'=Dec(C,c) to the terminal apparatus 20-2 (s5). In this case, the key storage apparatus 100 performs the decryption as the predetermined arithmetic processing, receives the ciphertext C as the information $\tau$, which is to be an arithmetic processing target, and outputs the decryption result M' as the operation result z. In this example, the terminal apparatuses 20-1 and 20-2 which request arithmetic processing are users of the key storage apparatus 100.

(About public key cryptosystem using RSA cipher)

An example of a public key cryptosystem using RSA cipher will be described. First, it is assumed that t is a security parameter. It is assumed that p, q(p#q) are t/2-bit prime numbers, and that m=pq is satisfied. It is assumed that e is a positive integer smaller than $\varphi(m)$ and is relatively prime to $\varphi(m)$, and that d is the reciprocal (de$\equiv$1(mod$\varphi(m)$))) of e modulo $\varphi(m)$. Here, $\varphi(m)$ is the Euler function of m, and, in this case, it is equal to (p-1)(q-1). A set of integers which are between 0 and m, including 0 and excluding m, is indicated by $Z_m$. It is assumed that M is an element of a plaintext space $Z_m$.

In the public key cryptosystem using RSA cipher, a public key y=(e,m) and a secret key d(=s) are assumed. For example, the key storage apparatus 100 generates first information s' and causes the one-way hash function Hash() to act on the first information s' to generate a secret key d=Hash(s'). Furthermore, the key storage apparatus 100 generates a public key y=(e,m) corresponding to the secret key d in accordance with the public key cryptosystem using RSA cipher. The key storage apparatus 100 may secretly store the secret key d or delete it. In this example, the secret key d is assumed to be deleted. Further, the key storage apparatus 100 discloses the public key y=(e,m).

The terminal apparatus 20-2 encrypts plaintext M by the following equation, using the public key y=(e,m), and transmits ciphertext C to the terminal apparatus 20-1.

$$C = M^e \bmod m$$

Here, an operation defined by a group is expressed like multiplication. That is, G indicates a group, and "$\alpha^b$" for $\alpha \in G$ means that an operation defined by the group G is caused to act on $\alpha$, b times.

The terminal apparatus 20-1 receives and stores the ciphertext C, and requests the key storage apparatus 100 to decrypt this ciphertext C.

The key storage apparatus 100 receives the ciphertext C and performs s1 to s4 (judgment about arithmetic processing provision period, request for key and generation of key). The key storage apparatus 100 decrypts the ciphertext C using the secret key d and transmits a decryption result M'=$C^d$ to the terminal apparatus 20-1 (s5). In this case, the key storage apparatus 100 performs the decryption as the predetermined arithmetic processing, receives the ciphertext C as the information $\tau$, which is to be an arithmetic processing target, and outputs the decryption result M' as the operation result z.

The terminal apparatus 20-1 obtains M"=$C^d$ mod m using a public key y=(m,e) and the decryption result M'=$C^d$. In this example and the following example, the terminal apparatus 20-1 which requests arithmetic processing is a user of the key storage apparatus 100.

(ElGamal cipher)

An example of a public key cryptosystem using ElGamal will be described. It is assumed that t is a security parameter. From a cyclic group G, such that an order q is a prime number, and the bit number of q is t is selected. A generator g of G is selected. From {0, ..., q-1}, x is randomly selected. It is assumed that $h=g^x$ is satisfied. A plaintext space is G, and M is an element of G. A ciphertext space is $G^2$, and $(C_1,C_2) \in G \times G$ is satisfied.

In the public key cryptosystem using ElGamal cipher, a public key $y=(G,q,g,h=g^x)$ and a secret key x(=s) are assumed. For example, the key storage apparatus 100 generates first information s' and causes the one-way hash function Hash() to act on the first information s' to generate a secret key x=Hash(s'). Furthermore, the key storage apparatus 100 generates a public key $y=(G,q,g,h=g^x)$ corresponding to the secret key x in accordance with the public key cryptosystem using ElGamal. The key storage apparatus 100 may secretly store the secret key x or delete it. In this example, the secret key x is assumed to be deleted. Further, the key storage apparatus 100 discloses the public key $y=(G,q,g,h=g^x)$.

The terminal apparatus 20-2 encrypts information M by the following equations, using the public key $y=(G,q,g,h=g^x)$.

$$C=(C_1,C_2)$$

$$C_1=g^r$$

$$C_2=Mh^r$$

where r is a random number generated by the terminal apparatus 20-2 and is an integer randomly selected from 0<r<q. Here, an operation defined by a group is expressed like multiplication.

The terminal apparatus 20-2 transmits ciphertext C to the terminal apparatus 20-1.

The terminal apparatus 20-1 receives and stores the ciphertext C, and requests the key storage apparatus 100 to decrypt this ciphertext C.

The key storage apparatus 100 receives the ciphertext C and performs s1 to s4 (judgment about arithmetic processing provision period, request for key and generation of key). The key storage apparatus 100 decrypts the ciphertext C using the secret key x and transmits a decryption result $M'=C_2/C_1^x$ to the terminal apparatus 20-1 (s5).

The terminal apparatus 20-1 may transmit a part $C_1$ of the ciphertext C to the key storage apparatus 100. In this case, the key storage apparatus 100 performs s1 to s4, obtains a decryption result $C_1^x$ using the part $C_1$ of the ciphertext C and the secret key x and transmits it to the terminal apparatus 20-1. Furthermore, the terminal apparatus 20-1 obtains a decryption result M' by the following equation, using another part $C_2$ of the ciphertext and the decryption result $C_1^x$.

$$M'=C_2/C_1^x$$

(Elliptic ElGamal cipher)

It is assumed that E is an elliptic curve parameter, J and H are points on the elliptic curve E, and q is an order on the point J on the elliptic curve E. In the public key cryptosystem using elliptic ElGamal cipher, a public key $y=(E,q,J,H=xJ)$ and a secret key x(=s) are assumed. For example, the key storage apparatus 100 generates first information s' and causes the one-way hash function Hash() to act on the first information s' to generate a secret key x=Hash(s'). Furthermore, the key storage apparatus 100 generates a public key $y=(E,q,J,H=xJ)$ corresponding to the secret key x in accordance with the public key cryptosystem using ElGamal. The key storage apparatus 100 may secretly store the secret key x or delete it. In this example, the secret key x is assumed to be deleted. Further, the key storage apparatus 100 discloses the public key $y=(E,q,J,H=xJ)$.

The terminal apparatus 20-2 encrypts information M by the following equations, using the public key $y=(E,q,J,H=xJ)$.

$$C=(C_1,C_2)$$

$$C_1=rJ$$

$$C_2=M+rH$$

where r is a random number generated by the terminal apparatus 20-2 and is an integer randomly selected from 0<r<q. Here, an operation defined by a group is expressed like addition.

The terminal apparatus 20-2 transmits ciphertext C to the terminal apparatus 20-1.

The terminal apparatus 20-1 receives and stores the ciphertext C, and requests the key storage apparatus 100 to decrypt this ciphertext C.

The key storage apparatus 100 receives the ciphertext C and performs s1 to s4 (judgment about arithmetic processing provision period, request for key and generation of key). The key storage apparatus 100 decrypts the ciphertext C using the secret key x and transmits a decryption result $M'=C_2-xC_1$ to the terminal apparatus 20-1 (s5).

The terminal apparatus 20-1 may transmit a part $C_1$ of the ciphertext C to the key storage apparatus 100. In this case, the key storage apparatus 100 performs s1 to s4, obtains a decryption result $xC_1$ using the part $C_1$ of the ciphertext C and the secret key x and transmits it to the terminal apparatus 20-1. Furthermore, the terminal apparatus 20-1 obtains a decryption result M' by the following equation, using another part $C_2$ of the ciphertext and the decryption result $xC_1$.

$$M'=C_2-xC_1$$

(RSA signature)

An example of a signature system using RSA cipher will be described. In the public key cryptosystem using RSA cipher, a public key $y=(e,m)$ and a signature key $v(=s)$ are assumed. For example, the key storage apparatus 100 generates first information s' and causes the one-way hash function Hash() to act on the first information s' to generate a signature key $v=Hash(s')$. Furthermore, the key storage apparatus 100 generates a public key $y=(e,m)$ corresponding to the signature key v in accordance with the public key cryptosystem using RSA cipher. The key storage apparatus 100 may secretly store the signature key v or delete it. In this example, the signature key v is assumed to be deleted. Further, the key storage apparatus 100 discloses the public key $y=(e,m)$.

The terminal apparatus 20-1 requests the key storage apparatus 100 to generate a signature for plaintext M.

The key storage apparatus 100 receives the plaintext M and performs s1 to s4. The key storage apparatus 100 generates a signature $\sigma=M^v$ for the plaintext M using the signature key v and transmits the signature $\sigma$ to the terminal apparatus 20-1 (s5). In this case, the key storage apparatus 100 performs the signature generation as the predetermined arithmetic processing, receives the plaintext M as the information $\tau$, which is to be an arithmetic processing target, and outputs the signature $\sigma$ as the operation result.

The terminal apparatus 20-1 receives and stores the signature $\sigma$, and transmits the plaintext M and its signature $\sigma$ to the terminal apparatus 20-2.

The terminal apparatus 20-2 receives a public key $y=(m,e)$ from the key storage apparatus 100, verifies whether the following equation is satisfied or not using the plaintext M, the electronic signature $\sigma$ and the public key $y=(m,e)$, and judges that the electronic signature $\sigma$ is authentic if the following equation is satisfied.

$$M=\sigma^e \bmod m$$

<Effects>

Though it is possible to obtain a key s from first information s' using a one-way function, it is impossible to obtain the first information s' from the key s because it means to perform inverse operation of the one-way function. Therefore, if the first information s' is eliminated after expiration of an arithmetic processing provision period, it is not possible for an attacker to resume a service in the same configuration as a configuration during the arithmetic processing provision period even if the attacker has the key s.

<Variation>

Though the key storage apparatus 100 is provided with the arithmetic processing section 101 in the present embodiment, the arithmetic processing section 101 may be configured as a separate apparatus. In this case, a secret key is requested from the key storage apparatus 100 by the arithmetic processing apparatus.

In the encryption process and decryption process of the present embodiment, a certain terminal apparatus transmits ciphertext to another terminal apparatus. However, the certain terminal apparatus may store the ciphertext without transmitting the ciphertext and request itself decryption of the ciphertext from the key storage apparatus 100. For example, by making such a configuration that information inside the terminal apparatus 20-1 is encrypted in a manner that the terminal apparatus 20-1 itself cannot decrypt the encrypted information, it is possible to prevent information leakage even when the terminal apparatus 20-1 is stolen or lost.

<Second embodiment>

Description will made mainly on parts different from the first embodiment. In a second embodiment, a cloud key management type cryptosystem (see Patent literature 1) is utilized to request decryption of information to be a target.

In the first embodiment, an administrator of the key storage apparatus 100 can know a decryption result of ciphertext C. Therefore, when the administrator of the key storage apparatus 100 is different from the user of the terminal apparatus 20-1, there is a possibility that the administrator of the key storage apparatus 100 may know information to be known only by the user of the terminal apparatus 20-1. In comparison, the second embodiment is different from the first embodiment in that the key storage apparatus 100 performs decryption of a random-reducible ciphertext (disturbed information). A random-reducible encryption system is constituted by a randomization algorithm and a restoration algorithm. The randomization algorithm is a probability algorithm which outputs different ciphertext using ciphertext and random numbers, and the output does not depend on input but is in accordance with randomly selected ciphertext and indistinguishable probability distribution. The restoration algorithm is an algorithm which outputs plaintext obtained by decrypting the original ciphertext, with a result of decrypting the different ciphertext, which is the output of the randomization algorithm, and the random numbers used in the randomization algorithm as inputs. Such a cryptosystem can be configured, for example, with a homomorphic cryptosystem such as ElGamal cipher, elliptic ElGamal cipher, RSA cipher and Paillier cipher. The second embodiment will be described while an example of a random self-reducible cryptosystem configured with the use of the homomorphic cryptosystem is being shown.

In the second embodiment, arithmetic processing is performed for disturbed information in which a relationship with original information is disturbed by a random number r, with the use of a key s.

For example, in the case of performing decryption by a public key cryptosystem as the arithmetic processing, the processing is performed as below.

The terminal apparatus 20-1 generates a random number r and generates disturbed information $\tau$ (information to be an arithmetic processing target) in which a relationship with ciphertext C is disturbed by the random number r. The random number r is stored in a storage section not shown.

In other words, the terminal apparatus 20-1 generates the disturbed information $\tau$ corresponding to the ciphertext C and the random number r in accordance with a randomization algorithm defined from the random self-reducibility of the cryptosystem. For example, in the case where the ciphertext C is ciphertext by the homomorphic cryptosystem, the terminal apparatus 20-1 generates distributed information $\tau=Enc(y,r)C$ by multiplication of $Enc(y,r)$ by C, where ciphertext (random-number ciphertext) obtained by encrypting the random number r with a public key y is indicated by $Enc(y,r)$.

The terminal apparatus 20-1 transmits the disturbed information $\tau$ to the key storage apparatus 100 and requests decryption thereof.

The key storage apparatus 100 receives the disturbed information $\tau$ and performs s1 to s4.

The arithmetic processing section 101 of the key storage apparatus 100 decrypts the disturbed information $\tau$ with the use of a secret key d(=s) in accordance with the homomorphic encryption system described before and transmits a decryption result $z=Dec(\tau,d)$ to the terminal apparatus 20-1 (s5). The terminal apparatus 20-1 receives the decryption result z.

The terminal apparatus 20-1 takes out the random number r from the storage section not shown and obtains a decryption result M' of the ciphertext C using the decryption result z of the disturbed information $\tau$ and the random number r in accordance with a restoration algorithm defined from the random self-reducibility of the cryptosystem. For example, in the case of the above-mentioned example in which the disturbed information $\tau=Enc(y,r)C$ is satisfied, the terminal apparatus 20-1 can obtain, using an inverse element $r^{-1}$ of the random number r, the decryption result M' of the ciphertext C by $M'=(r^{-1})z$, multiplication of z by the element $r^{-1}$. This is based on the fact that the encryption and decryption functions of the homomorphic cryptosystem have homomorphism.

<Effects>

Due to such a configuration, effects similar to those of the first embodiment can be obtained. Furthermore, in the present embodiment, it is the disturbed information $\tau$ corresponding to the ciphertext C and the random number r that is decrypted by the key storage apparatus 100, and it is not the ciphertext C itself. Even if the key storage apparatus 100 can obtain the decryption result z of the disturbed information $\tau$, the key storage apparatus 100 cannot restore the decryption result M' of the ciphertext C from the decryption result z because it does not know the random number r. Thereby, it is possible to prevent the administrator of the key storage apparatus 100 from knowing the decryption result M' of the ciphertext C. The configuration of the second embodiment may be combined with decryption by another public key cryptosystem (for example, ElGamal cipher, elliptic ElGamal cipher or the like), encryption and decryption by a common key cryptosystem, RSA signature, or the like.

<Other variations>

The present invention is not limited to the embodiments and variations described above. For example, the various processes described above are not only executed in time series in accordance with the description but may be executed in parallel or separately according to the throughput of an apparatus which executes the processes or as necessary. In addition, modification can be made as appropriate within a range not departing from the scope of the present invention.

<Program and recording medium>

Further, the various processing functions in each apparatus described in the embodiments and variations described above may be realized by a computer. In this case, processing contents of the functions which each apparatus is to be provided with are written as a program. Then, by executing this program on the computer, the various processing functions in each apparatus described above are realized on the computer.

The program in which the processing contents are written can be recorded in a computer-readable recording medium. As the computer-readable recording medium, anything, for example, a magnetic recording device, an optical disk, a magneto-optical recording medium, a semiconductor memory or the like is possible.

Further, distribution of this program is performed, for example, by selling, transferring or lending a portable-type recording medium, such as a DVD and a CD-ROM, in which the program is recorded. Furthermore, this program may be distributed by storing it in a storage device of a server computer and transferring it from the server computer to other computers via a network.

For example, the computer which executes such a program first stores the program recorded in the portable-type recording medium or the program transferred from the server computer into its storage section once. Then, at the time of executing a process, the computer reads the program stored in its storage section and executes a process in accordance with the read program. Further, as another embodiment of this program, the computer may read the program directly from the portable-type recording medium and execute a process in accordance with the program. Furthermore, each time a program is transferred to this computer from the server computer, the computer may execute a process in accordance with the received program in succession. Further, such a configuration is also possible that the program is not transferred from the server computer to this computer, but the above-described processes are executed by a so-called ASP (Application Service Provider) type service in which processing functions are realized only by an instruction to execute the program and acquisition of a result. It is assumed that the program includes information which is provided for processing by an electronic computer and is equivalent to a program (such as data which is not a direct command to a computer but has a nature of specifying processing of the computer).

Further, though it is assumed that each apparatus is configured by executing a predetermined program on a computer, at least a part of the processing contents may be realized like hardware.

[DESCRIPTION OF REFERENCE NUMERALS]

    20-1,20-2 terminal apparatus
    100 key storage apparatus
    101 arithmetic processing section
    103 one-way function section
    105 storage section
    107 expiration judging section

**Claims**

1. A key storage apparatus (100), wherein
before expiration of a period for providing a user with arithmetic processing using a key, the key is secretly managed, the key storage apparatus receives information $\tau$ which is a target of the arithmetic processing, and performs the arithmetic processing, and when the period expires the key is outputted ; and
the key storage apparatus (100) comprises:

    a one-way function section (103) causing a one-way function to act on first information to generate the key;
    a storage section (105) secretly storing the first information during the period; and

    an expiration judging section (107) eliminating the first information from the storage section (105) and outputting the key to the user when the period expires, and transmitting an error message to the user corresponding the information $\tau$ when receiving the information $\tau$ after the period has expired.

2. The key storage apparatus (100) according to claim 1, wherein
the arithmetic processing is performed for such disturbed information that a relationship with original information is disturbed by a random number r, with the use of the key.

3. A key storage method performed by a key storage apparatus, wherein
before expiration of a period for providing a user with arithmetic processing using a key, the key is secretly managed, information $\tau$ which is a target of the arithmetic processing is received by the key storage apparatus, and the arithmetic processing is performed by the key storage apparatus, and when the period expires the key is outputted; and
the key storage method comprises:

    a one-way function step of a one-way function section (103) causing a one-way function to act on first information to generate the key;
    a storage step of a storage section (105) secretly storing the first information during the period; and
    an expiration judging step of an expiration judging section (107) eliminating the first information and outputting the key to the user when the period expires, and transmitting an error message to the user corresponding the information $\tau$ when receiving the information $\tau$ after the period has expired.

4. The key storage method according to claim 3, wherein
the arithmetic processing is performed for such disturbed information that a relationship with original information is disturbed by a random number r, with the use of the key.

5. A program for causing a computer to function as the key storage apparatus (100) according to claim 1 or 2.

**Patentansprüche**

1. Vorrichtung zur Schlüsselspeicherung (100), wobei der Schlüssel vor Ablauf eines Zeitraums zum Bereitstellen einer arithmetischen Verarbeitung unter Verwendung eines Schlüssels an einen Benutzer geheim verwaltet wird, die Vorrichtung zur Schlüsselspeicherung eine Information τ empfängt, die ein Ziel der arithmetischen Verarbeitung ist, und die arithmetische Verarbeitung durchführt, und wenn der Zeitraum abgelaufen ist, der Schlüssel ausgegeben wird; und

die Vorrichtung zur Schlüsselspeicherung (100) umfasst:

einen Einwegfunktionsabschnitt (103), der bewirkt, dass eine Einwegfunktion auf eine erste Information wirkt, um den Schlüssel zu erzeugen;

einen Speicherabschnitt (105), der die erste Information während des Zeitraums geheim speichert; und

einen Ablaufbewertungsabschnitt (107), der die erste Information aus dem Speicherabschnitt (105) entfernt und den Schlüssel an den Benutzer ausgibt, wenn der Zeitraum abgelaufen ist, und der eine Fehlermeldung an den Benutzer sendet, welcher der Information τ entspricht, wenn die Information τ empfangen wird, nachdem der Zeitraum abgelaufen ist.

2. Vorrichtung zur Schlüsselspeicherung (100) nach Anspruch 1, wobei
die arithmetische Verarbeitung für eine derartige gestörte Information durchgeführt wird, dass unter Verwendung des Schlüssels eine Beziehung zu der ursprünglichen Information durch eine Zufallszahl r gestört wird.

3. Verfahren zur Schlüsselspeicherung, das durch eine Vorrichtung zur Schlüsselspeicherung durchgeführt wird, wobei
der Schlüssel vor Ablauf eines Zeitraums zum Bereitstellen einer arithmetischen Verarbeitung unter Verwendung eines Schlüssels an einen Benutzer geheim verwaltet wird, die Information τ, die ein Ziel der arithmetischen Verarbeitung ist, von der Vorrichtung zur Schlüsselspeicherung empfangen wird und die arithmetische Verarbeitung von der Vorrichtung zur Schlüsselspeicherung durchgeführt wird, und wenn der Zeitraum abgelaufen ist, der Schlüssel ausgegeben wird; und
das Verfahren zur Schlüsselspeicherung umfasst:

einen Einwegfunktionsschritt eines Einwegfunktionsabschnitts (103), der bewirkt, dass eine Einwegfunktion auf eine erste Information wirkt, um den Schlüssel zu erzeugen;

einen Speicherschritt eines Speicherabschnitts (105), der die erste Information während des Zeitraums geheim speichert; und

einen Ablaufbewertungsschritt des Ablaufbewertungsabschnitts (107), der die erste Information entfernt und den Schlüssel an den Benutzer ausgibt, wenn der Zeitraum abgelaufen ist, und der eine Fehlermeldung an den Benutzer sendet, welcher der Information τ entspricht, wenn die Information τ empfangen wird, nachdem der Zeitraum abgelaufen ist.

4. Verfahren zur Schlüsselspeicherung nach Anspruch 3, wobei
die arithmetische Verarbeitung für eine derartige gestörte Information durchgeführt wird, dass unter Verwendung des Schlüssels eine Beziehung zu der ursprünglichen Information durch eine Zufallszahl r gestört wird.

5. Programm zum Bewirken, dass ein Computer als Vorrichtung zur Schlüsselspeicherung (100) nach Anspruch 1 oder 2 fungiert.

**Revendications**

1. Appareil de stockage de clés (100), dans lequel avant expiration d'une période pour fournir à un utilisateur un traitement arithmétique en utilisant une clé, la clé est secrètement gérée, l'appareil de stockage de clés reçoit des informations τ qui sont une cible du traitement arithmétique, et réalise le traitement arithmétique, et lorsque la période expire la clé est communiquée en sortie ; et
l'appareil de stockage de clés (100) comprend :

une section de fonction unidirectionnelle (103) amenant une fonction unidirectionnelle à agir sur des premières informations pour générer la clé ;

une section de stockage (105) stockant secrètement les premières informations au cours de la période ; et

une section d'évaluation d'expiration (107) supprimant les premières informations de la section de stockage (105) et communiquant en sortie la clé à l'utilisateur lorsque la période expire, et transmettant un message d'erreur à l'utilisateur correspondant aux informations τ lors de la réception des informations τ une fois que la période a expiré.

2. Appareil de stockage de clés (100) selon la revendication 1, dans lequel
le traitement arithmétique est réalisé pour ces informations tellement perturbées qu'une relation avec les informations d'origine est perturbée par un nombre aléatoire r, en utilisant la clé.

3. Procédé de stockage de clés mis en oeuvre par un appareil, dans lequel
avant expiration d'une période pour fournir à un utilisateur un traitement arithmétique en utilisant une clé, la clé est secrètement gérée, des informations $\tau$ qui sont une cible du traitement arithmétique sont reçues par l'appareil de stockage de clés, et le traitement arithmétique est réalisé par l'appareil de stockage de clés, et lorsque la période expire la clé est communiquée en sortie ; et
le procédé de stockage de clés comprend :

une étape de fonction unidirectionnelle d'une section de fonction unidirectionnelle (103) amenant une fonction unidirectionnelle à agir sur des premières informations pour générer la clé ;
une étape, de stockage d'une section de stockage (105) stockant secrètement les premières informations au cours de la période ; et
une étape d'évaluation d'expiration d'une section d'évaluation d'expiration (107) supprimant les premières informations et communiquant en sortie la clé à l'utilisateur lorsque la période expire, et transmettant un message d'erreur à l'utilisateur correspondant aux informations $\tau$ lors de la réception des informations $\tau$ une fois que la période a expiré.

4. Procédé de stockage de clés selon la revendication 3, dans lequel
le traitement arithmétique est réalisé pour ces informations tellement perturbées qu'une relation avec les informations d'origine est perturbée par un nombre aléatoire r, en utilisant la clé.

5. Programme pour amener un ordinateur à servir d'appareil de stockage de clés (100) selon la revendication 1 ou 2.

Fig. 1

start

s1

HAS ARITHMETIC
PROCESSING PROVISION
PERIOD EXPIRED?

yes

no    s3

s2

TRANSMIT ERROR MESSAGE

REQUEST KEY

s4

GENERATE
KEY

s5

ARITHMETIC
PROCESSING

end

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012151756 A

- WO 2004008676 A2

**Non-patent literature cited in the description**

- **BERSON T. et al.** Cryptography as a Network Service. *8th ANNUAL SYMPOSIUM ON NETWORK AND DISTRIBUTED SYSTEM SECURITY (NDSS'01),* 07 February 2001, 1-12